# EUROPEAN PATENT APPLICATION

(11) **EP 4 779 802 A1**
(43) Date of publication of application: **22.07.2026**
(21) Application number: 25382022.9
(22) Date of filing: 16.01.2025
(51) Int. Cl.: H01Q 3/00, H04B 7/06

(54) **A METHOD AND SYSTEM FOR COMMUNICATING WITH A UE COMPRISING A DIRECTIONAL ANTENNA**

(71) Applicant: Vodafone Group Services Limited, Newbury RG14 2FN (GB)
(72) Inventor: DOMINGUEZ, Francisco Javier, London, W2 6BY (GB); FERNANDEZ, Victor, London, W2 6BY (GB); ROLPH, Alexander, London, W2 6BY (GB); HODGSON, Sean, London, W2 6BY (GB)
(74) Representative: Boult Wade Tennant LLP

(57) **Abstract**

A method for communicating with a UE comprising a directional antenna that is part of a communication system of the UE and that is configured for communication with a cellular network. The method comprises obtaining, at the cellular network and/or UE, information about one or more base stations of the cellular network and information measured by or associated with the directional antenna. The UE is configured for communication with a base station of the one or more base stations based on the obtained information about the base station and the obtained information measured by or associated with the directional antenna.

## Description

### FIELD

The disclosure relates generally to methods and systems of communicating within a cellular network and specifically, a method and system for communicating with a user equipment, UE, comprising a directional antenna.

### BACKGROUND

In current 3GPP standards, receive antennas (Rx) have been modelled in the UE, but only for 2 Rx, 4 Rx or maximum 8 Rx only. For transmit antennas (Tx), a maximum of 2 Tx is described. Both the Rx and Tx antenna arrangements described in current 3GPP standards are for omnidirectional antennas that allow transmission with any base station in the network. This antenna technology is typically incorporated within smartphones, tablet devices, and desktop computers, all of which require generic omnidirectional antennas for typical operation.

However, these omnidirectional antennas typically have a gain of 3dB, or 5dB in best-case scenarios. This gain level is not sufficient to support connectivity in long distance and/or high attenuation cases. The information exchange between the UE and the network according to current 3GPP standards is thus limited by the currently implemented systems.

Therefore, a method and system that overcomes these issues is desirable.

### SUMMARY

Against this background, there is provided a method and system for communicating with a UE comprising a directional antenna that is part of a communication system of the UE and that is configured for communication with a cellular network. Additional aspects of the invention appear in the description and claims.

A UE comprises a directional antenna that is used to communicate with a cellular network. A directional antenna (which may also be referred to as a directive antenna or beam antenna) is an antenna that can receive or radiate radio waves in specific directions with greater power. This is in contrast to omnidirectional antennas, which radiate (approximately) equal radio power in all azimuthal directions.

The UE may be a user communication device such as a mobile phone or another device that communicates with a network as part of its implementation - for example, a machine-to-machine device, an autonomous or semi-autonomous device such as an unmanned aerial vehicle, and so on.

Base stations or cellular network nodes provide connection between a UE and the wider telecommunications network. Information about at least one base station of the cellular network is obtained at or by the cellular network. In some cases (for example, where the UE is already connected to a base station), this may include information being obtained by the UE. In other cases, the information may be obtained at or by the UE.

The information about the base station may include, for example, location information for the base station, a base station identifier, information received from the base station, a configuration of the base station, network traffic information for the base station, and so on.

The directional antenna can measure certain parameters as part of its operation. For example, information about received signals may be measured or otherwise identified, such as an angle of arrival. Other information may be associated with the antenna as part of its operation - for example, a gain of the antenna, a beamwidth, an orientation, a radiation pattern, a type of antenna, and so on.

In other examples, the information may be associated by the antenna by being determined by the antenna or the UE. For instance, an azimuth angle can be determined based on an angle of arrival, and this may be determined by a processor in communication with the antenna or the UE. Some information may be both measured by and associated with the antenna.

This information related to the directional antenna is also obtained at the cellular network and/or the UE. Both pieces or sets of information need not be obtained by the same entity. For example, the information about the one or more base stations may be obtained at the cellular network and the information measured by the directional antenna may be obtained at the UE. Other combinations are possible.

The information about the base station and the information related to the antenna are used to set up the UE for communication with the base station. Using both these pieces of information can allow a UE having a directional antenna only to connect to a cellular network effectively.

In accordance with a first aspect, there is provided a method for communicating with a UE comprising a directional antenna that is part of a communication system of the UE and that is configured for communication with a cellular network, the method comprising:
obtaining, at the cellular network and/or UE, information about one or more base stations of the cellular network and information measured by or associated with the directional antenna; and
configuring the UE for communication with a base station of the one or more base stations based on the obtained information about the base station and the obtained information measured by or associated with the directional antenna.

This method may allow a UE comprising a directional antenna only to communicate with a cellular network. This can allow connectivity in long distance or high attenuation cases, such as in remote areas where there may be "network holes", since directional antennas can achieve higher gains than omnidirectional antennas. Accordingly, network coverage and performance can be improved.

The directional antenna may be an array of antennas - that is, a plurality of connected antennas (fed by the same transmitter or receiver) configured to operate as a signal antenna. Antenna arrays can achieve higher gain or directivity (the degree to which radiation emitted by the antenna is concentrated in a particular direction) than can be achieved by a signal antenna element.

Information associated with the directional antenna may include information about the antenna (for example, information about the antenna configuration, antenna properties and so on). The information may more generally be associated with the UE that the antenna is comprised within, rather than the antenna specifically. For example, where the UE forms part of an aircraft, the information associated with the directional antenna may include an altitude of the aircraft, as the antenna may accordingly have an associated altitude as well.

Configuring the UE may comprise configuring the directional antenna of the UE for communication with the one or more base stations. Other methods of configuring the UE for communication with the one or more base stations are possible, including but not limited to changing a location of the UE (for example, where the UE is moveable such as when comprised within an autonomous robot or a vehicle, the UE may move).

The information about the one or more base stations need not be received from the base stations. For example, the information might be stored and/or accessed from elsewhere. For instance, obtaining the information may comprise obtaining the information from a server that is located outside the UE and is in communication with the cellular network location. This can allow legacy UEs having a directional antenna to connect to the cellular network, even when these legacy UEs are unable to obtain the information about the one or more base stations and/or allow the cellular network to obtain the information measured by or associated with the directional antenna. That is, UEs having a directional antenna, even when not configured to implement the information elements discussed herein, can still connect to the cellular network via the directional antenna.

The server may be an API server in the cellular network that can be exposed (made available) to one or more network elements. The one or more network elements may send data to the API server to be stored and accessed by the one or more network elements. The one or more network elements may send the data in response to a request from the API server. In other examples, the API server may retrieve the data from the one or more network elements. In some examples, the data may be sent or retrieved in real-time or near-real-time.

In further examples, the information may also or instead be obtained from the one or more base stations of the cellular network. In yet further examples, obtaining the information may comprise obtaining the information from measurements made by the UE and/or from information stored by the UE.

Optionally, obtaining the information may comprise configuring the directional antenna to operate using a wide beamwidth to identify the one or more base stations of the cellular network. That is, at least some information about the base station (for example, location information) may be obtained using the directional antenna.

Operating using a wide beamwidth may comprise configuring the antenna to implement a reduced antenna gain (that is, a non-maximum antenna gain). The antenna gain may be reduced by more than a threshold amount (for example, by 0.5 dB, 1 dB, 2dB or another value).

When the directional antenna comprises an array of antennas, operating using a wide beamwidth may comprise operating using only a subset of the antenna elements (which may reduce the gain of the antenna array). Operating using a widest beamwidth may comprise operating using only a single antenna element, for example. In other examples, using a wide beamwidth when the directional antenna comprises an array of antennas may comprise operating using a reduced antenna gain for the antenna array as a whole.

Optionally, the information about the one or more base stations may comprise a location of the one or more base stations, a number of sectors of the one or more base stations and/or an azimuth angle of each sector of the one or more base stations. Preferably, this information is sent to the UE. Either or both of the number of sectors and the azimuth angle of each sector can define, at least in part, a size and shape of an antenna beam of a base station. This may impact how the UE should be configured for communication with the base station - for example, the beamwidth and orientation of the UE directional antenna, the location of the UE (including an altitude), and so on.

In some implementations, the information measured by or associated with the directional antenna may comprise an angle of arrival of a signal received by the UE from the one or more base stations. The signal arriving at the UE antenna may be a reflected signal and thus may not correlate directly to the angle to the base station. The angle of arrival can provide information about the path of the signal and may indicate that there are objects in the direct path between the UE and the base station. The angle of arrival can thus be used to configure the directional antenna of the UE to improve the connection to the base station.

In further implementations, the information measured by or associated with the antenna may comprise an orientation and/or beamwidth configuration of the directional antenna. This can be used to determine how to configure the UE for communication with the base station. For example, the orientation and/or beamwidth may be changed to allow connection to the base station. Changing the beamwidth can include lowering the beamwidth to increase gain. This can increase performance whilst also reducing interference. In other examples, changing the beamwidth may comprising widening the bandwidth. For example, an angle of arrival or other information may indicate that signals cannot be received from the base station along a direct path (for example, there is environmental clutter along the path). Therefore, a wider path may be needed to receive signals from the base station.

In yet further examples, the information measured by or associated with the antenna may comprise one or more capabilities of the directional antenna. Capabilities of the antenna may include a gain, a beamwidth (for example, a maximum and/or minimum beamwidth), a radiation pattern, and so on. In cases where the directional antenna is an array of antennas, the capabilities may include capabilities of the individual antenna elements and/or a subset of the antenna elements as well. This may be used to determine a wide beamwidth for identifying the base stations, for example.

The capabilities of the directional antenna can be used to determine how to configure the UE for communication with the base station. For example, the radiation pattern may be taken into account when connecting to the base station.

In some examples, the information measured by or associated with the directional antenna may comprise a signal quality measurement and/or a signal strength measurement. This information can be used to determine how to configure the UE for communication with the base station.

Optionally, the method may further comprise selecting a base station from the one or more base stations based on the obtained information for the one or more base stations of the cellular network and the obtained information measured by or associated with the directional antenna.

In particular, there may be more than one base station available for the UE to connect to. This may be due to the relatively higher gain achievable using a directional antenna or simply that a plurality of base stations is in the vicinity of the UE (which may typically be the case in high population areas such as towns or cities). The base station to which the UE connects can thus be selected from the plurality of base stations based on the obtained information. A base station offering sufficient connection to the UE may be prioritised over another base station. It will be appreciated that where only one base station is available, the selection may comprise selecting the available base station.

In some examples, selecting the base station from the one or more base stations based on the information may comprise receiving a signal from at least some of the one or more base stations and selecting a base station for which a received signal strength at the UE is greater than a threshold amount. Thus, a base station having a sufficient received signal strength may be selected from a plurality of base stations. Another criterion or other criteria may be used to select the base station, including but not limited to a signal quality, a distance to the base station, a load of the base station, and so on.

In some examples, the method may further comprise, after configuring the UE for communication with the base station, communicating, between the UE and the server and/or between the UE and the one or more base stations, additional information associated with or measured by the UE. In further examples, the method may additionally or alternatively comprise, communicating, between the UE and the one or more base stations, additional information associated with or determined by the one or more base stations. In some cases, this information may be communicated via a server. For example, a base station may send information to a server, which may then communicate with a UE, or a UE may send information to the server, which may then communicate with the base station, or both.

The UE may connect to the base station to establish a connection between the UE and the cellular network. However, additional information measured by the UE after connection to the base station (for example, an angle of arrival) or associated with the UE (for example, the presence of an omnidirectional antenna) may be communicated to allow the configuration of the UE to be refined, adapted or changed. Similarly, additional information associated with or determined by the one or more base stations (for example, a different pointing angle of the directive antenna) may be communicated to allow refining, adapting or changing of the configuration of the UE.

Accordingly, the method may further comprise, after configuring the UE for communication with the selected base station based on the information, further configuring the UE based on the additional information and/or configuring the one or more stations based on the additional information.

In some cases, the method may further comprise further configuring the UE based on one or more instructions. Additionally or alternatively, the method may further comprise configuring the one or more base stations based on one or more instructions. Accordingly, the method may further comprise communicating, between the UE and the server and/or between the UE and the one or more base stations, one or more instructions to further configure the UE and/or to configure the one or more base stations based on the additional information. That is, the base station may instruct the UE to reconfigure itself (including, optionally, (re)configuring the antenna), the server may instruct the UE to reconfigure itself and/or the UE may instruct one or more base stations to be configured. However, the UE and/or one or more base stations need not act on the received instructions, or may be (re)configured in the absence of instructions.

The one or more instructions may be any instructions for configuring the base station and/or further configuring the UE in the manners discussed herein.

Optionally, the one or more instructions may be communicated after determining that the additional information fulfils one or more criteria. For instance, the additional information may comprise an altitude of the UE (for example, where the UE is an aircraft) and the one or more instructions may only be communicated if the altitude of the UE exceeds a threshold amount.

Reconfiguring the UE and/or configuring the one or more base stations may comprise, based on the additional information, ceasing communications between the UE and the base station and initiating communications between the UE and another base station of the one or more base stations. This may be achieved by adjusting the orientation and/or bandwidth of the directional antenna to point towards the another base station. Other configuration aspects of the antenna may be changed to cease communications. Initiating communications with another base station may allow reduced network interference and/or better network access (for instance, stronger signal or quicker responses).

In another example, reconfiguring the UE and/or configuring the one or more base stations may comprise, based on the additional information, preventing handover from the base station to another base station of the one or more base stations. Preventing handover may allow for reduced network interference.

Optionally, further configuring the UE may comprise, when the distance between the UE and the selected base station is greater than the distance between the UE and a different base station, changing an orientation of the directional antenna to direct the directional antenna towards the different base station. The different base station may be one of the one or more base stations, or may be another base station (for example, a base station identified by an omnidirectional antenna of the UE).

In some examples, the method may further comprise determining an azimuth angle between the UE and the base station that is expected to increase a received signal strength at the UE and/or is expected to decrease a received signal strength from other base stations of the one or more base stations, wherein further configuring the UE comprises configuring the directional antenna based on the azimuth angle. The UE can thus improve the connection to the cellular network and/or reduce interference with non-serving base stations. The azimuth angle may be determined by the base station, the other base stations, the UE or another entity.

In further implementations, the additional information may comprise an angle from a vertical axis of the directional antenna to the base station and the method may further comprise determining another angle from the vertical axis of the directional antenna to the base station that reduces a signal level to other base stations of the one or more base stations and/or increases a signal level to the base station. Further configuring the UE may then comprise adjusting an orientation of the directional antenna based on the another angle.

In some examples, the additional information may comprise a distance between the UE and at least some of the one or more base stations. The initial information may also comprise the distance between the UE and at least some of the one or more base stations. In either case, further configuring the UE may comprise, when the distance between the UE and the base station is greater than the distance between the UE and a different base station, changing an orientation of the directional antenna to direct the directional antenna towards the different base station.

The additional information may comprise information about the orientation and/or beamwidth of the directional antenna, which may be sent from the UE to the server or from the UE to the base station. This information can be used by the network to change or adapt a base station configuration. For example, this information can be used to configure the serving base station to improve the connection and/or to configure a non-serving base station to limit or reduce interference towards the non-serving base station.

Optionally, the additional information may comprise a received signal strength measured by the directional antenna and received from the base station and a received signal strength measured by the omnidirectional antenna and received from the another base station, wherein the another base station is further away from the UE aircraft than the selected base station. Typically, a UE will connect to a close or closest base station. However, in some cases and especially for aerial UEs, a closest base station may not provide a signal as strong as a base station further away. In the case of aerial UEs, this may be because the UE is located above environmental clutter and so can connect to a distant base station.

In some examples, preventing the handover may comprise preventing the handover when the received signal strength from the base station is lower than the received signal strength from the another base station. In other words, although the more distant base station can provide a stronger signal, the UE may be prevented from connecting to the further away base station. This can reduce, limit or prevent interference to the further away base station, which can in turn improve network performance.

In some examples, the UE may be comprised within a vehicle (for example, an aircraft). The aircraft may be a plane, drone, unmanned aerial vehicle or another aerial system. Aircraft in particular may typically operate about environmental clutter and therefore register good signal levels even from base stations that are far away, which could result in high interference. Implementing the methods discussed herein for an aerial UE can improve network performance through reducing interference between the UE and non-serving base stations that it may nevertheless be able to receive and/or send signals to. Furthermore, since an aircraft may be able to connect to far away base stations, an aircraft (for instance, a UAV) can be used to provide coverage in remote areas.

In accordance with a second aspect, there is provided a system for communicating with a UE comprising a directional antenna that is part of a communication system of the UE and that is configured for communication with a cellular network, the system being configured to perform any of the methods described above.

For example, the system may comprise the UE and the cellular network. The cellular network may comprise one or more base stations. The system may further comprise a server that is located outside the UE and is in communication with the cellular network. In some examples, the system may comprise the UE and the server only.

The methods described above may be implemented as a computer program comprising instructions to operate a computer or computer system. The computer program may be stored on a computer-readable medium, which may be non-transitory.

The computer system may include a processor, such as a central processing unit (CPU). The processor may execute logic in the form of a software program. The computer system may include a memory including volatile and non-volatile storage medium. The different parts of the system may be connected using a network (e.g. wireless networks and wired networks). The computer system may include one or more interfaces. The computer system may contain a suitable operating system such as UNIX (including Linux), Windows (RTM), for example.

The above methods may be implemented in a system for communicating with a UE comprising a directional antenna that is part of a communication system of the UE and that is configured for communication with a cellular network.

It should be noted that any feature described herein may be used with any particular aspect or embodiment of the invention. Moreover, the combination of any specific apparatus, structural or method features is also provided, even if that combination is not explicitly disclosed.

The invention will now be described with reference to the attached drawings depicting different embodiments thereof, the drawings being provided purely by way of example and not limitation.

### BRIEF DESCRIPTION OF DRAWINGS

The invention may be put into practice in a number of ways, and preferred embodiments will now be described by way of example only and with reference to the accompanying drawings, in which:
Figure 1 schematically illustrates a UE comprising a directional antenna in accordance with embodiments discussed herein;
Figure 2 illustrates a flowchart of a method for communicating with a UE comprising a directional antenna in accordance with embodiments discussed herein;
Figure 3 shows a flowchart of a method for configuring a UE comprising a directional antenna and/or configuring one or more base stations of a cellular network;
Figure 4 shows one embodiment of a system for communicating with a UE comprising a directional antenna; and
Figure 5 illustrates an exemplary architecture of a RAN intelligent controller that may be used to implement some embodiments discussed herein.

It should be noted that the Figures are illustrated in schematic form for simplicity and are not necessarily drawn to scale. Like features are provided with the same (or similar) reference numerals.

### DESCRIPTION OF PREFERRED EMBODIMENTS

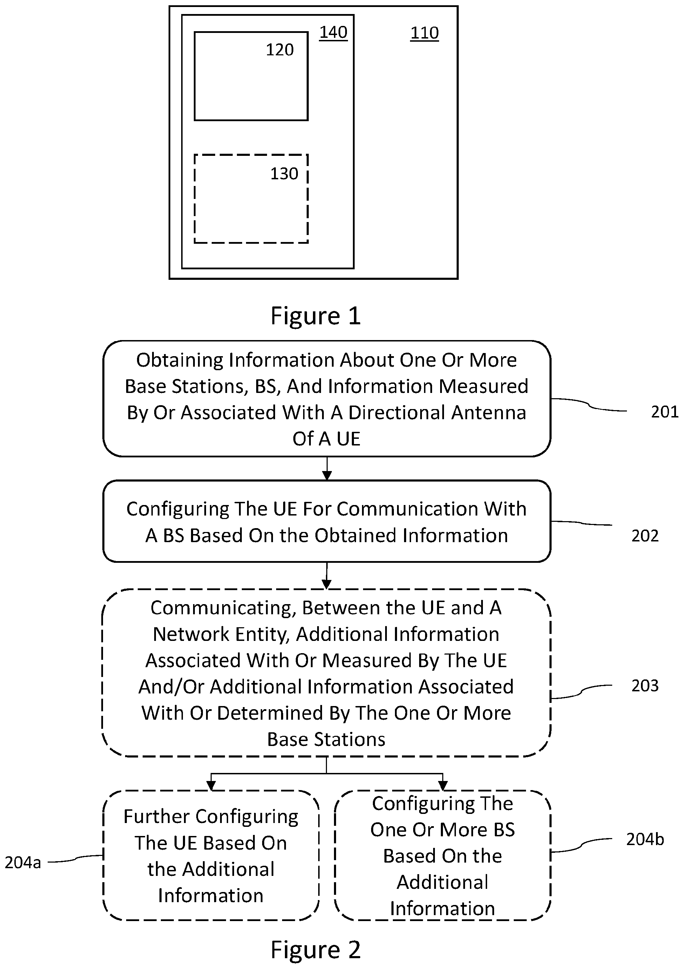

Figure 1 schematically illustrates a UE 110 that comprises a directional antenna 120 that is part of a communication system 140 of the UE and is configured for communication with a cellular network. The directional antenna 120 may comprise one or more Rx and/or Tx antennas.

The UE 110 may also optionally include an omnidirectional antenna 130, which may also be part of the communication system 140 of the UE and may be configured for communication with the cellular network. The omnidirectional antenna 130 may comprise one or more Rx and/or Tx antennas. The omnidirectional antenna 130 may be configured according to 3GPP standards or may be configured as described herein.

It will be appreciated that, although not shown, the UE 110 may also include additional components that may typically be included in computing devices for their use - for example, a CPU, memory, communication interfaces and so on.

The UE may be any device that interacts with the cellular network including, for example, a smartphone, tablet device, Internet of Things (IoT) device and so on. The UE may comprise or be comprised within a vehicle. For example, the UE may be comprised within an aircraft, including an aeroplane, helicopter, unmanned aerial vehicle (UAV), and so on. In other examples, the UE be comprised within an automotive vehicle (for example, a car, bus, motorcycle, lorry and so on). In yet further examples, the UE may be comprised within a robotic device - for instance, a robot that can navigate independently or semi-independently. The UE may be comprised in any other suitable device or object.

As discussed above, UEs may typically include omnidirectional Rx and Tx transmitters. However, UEs comprising directional antennas are not described in current 3GPP standards. Directional and omnidirectional antennas have different functionalities, requirements and configuration possibilities. For example, as discussed above, the gain level achievable using an omnidirectional antenna is not high enough to support connectivity in long distance and/or high attenuation cases, which limits the information exchange between the UE and the network. The present disclosure aims to address these issues by proposing a new information exchange to allow systems employing a directive antenna to communicate with a network (specifically, a cellular network). Thus, network coverage and performance can be improved.

Figure 2 illustrates a flow chart of a method for communicating with a UE comprising a directional antenna that is part of a communication system of the UE and that is also configured for communication with a cellular network. The method illustrated in Figure 2 may be implemented by the UE 110 shown in Figure 1, for example.

At step 201, information about one or more base stations of the cellular network is obtained, as well as information measured by or associated with the directional antenna. This information is obtained at the cellular network and/or at the UE.

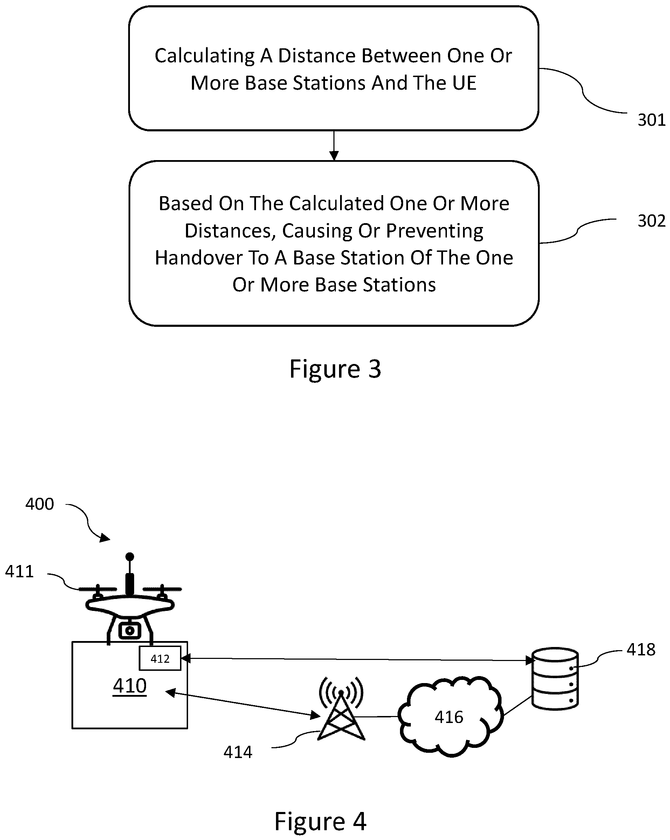

The information at step 201 may be obtained broadly in at least one of two ways: using a 3GPP approach; and using an application programming interface, API, approach. These options will be discussed briefly with reference to Figure 2 but will be discussed in more detail with reference to Figure 4.

Under the 3GPP approach, new information elements may be incorporated into 3GPP standards. These information elements may then be communicated from one or more base stations of the cellular network and/or from the UE, optionally between the one or more base stations and the UE. When the information is obtained from the UE and communicated to the cellular network, the information may be obtained from measurements made by the UE and/or from information stored by the UE.

In some examples, obtaining the information about the one or more base stations may comprise configuring the directional antenna to operate using a wide beamwidth to identify the one or more base stations of the cellular network. Operating using a wide beamwidth may comprise using a reduced antenna gain (that is, a non-maximum antenna gain). The antenna gain may be reduced by more than a threshold amount (for example, 0.5 dB, 1 dB, 2dB or another value). In some examples, when the directional antenna comprises an array of antennas, operating using a wide beamwidth may comprise operating using only a subset of the antenna elements. For instance, operating using a widest beamwidth may comprise operating using only a single antenna element. In other examples, using a wide beamwidth when the directional antenna comprises an array of antennas may comprise operating using a reduced antenna gain for the antenna array as a whole.

In other examples in which the UE also comprises an omnidirectional antenna, obtaining the information may comprise controlling the omnidirectional antenna to identify the one or more base stations of the cellular network. The omnidirectional antenna may be able to identify a greater number of base stations than a directional antenna, even when using a wide beamwidth. The orientation and/or bandwidth of the directional antenna can then be adjusted based on the information obtained via the omnidirectional antenna to point towards one of the base stations (for instance, the closest base station and/or the base station having the strongest signal).

Under the API approach, an API may be used to exchange the information with the cellular network. The information may thus be obtained from a server that is located outside the UE and is in communication with the cellular network. One advantage of the API approach is that it can be used with legacy UEs or other devices (for example, modems) that may not support sending and/or receiving the new information elements to be standardised in 3GPP but nevertheless have a directive antenna mounted to or included within them.

In either case, the information about the one or more base stations may comprise one or more of the following: a location of the one or more base stations; a number of sectors of the one or more base stations; and an azimuth angle of each sector of the one or more base stations.

For example, it may be useful for the UE to have information about where the base stations are (for instance, in relation to a current position of the UE). This information can be used to configure the directive antenna towards the base station. The location may comprise a two-dimensional location of the base station. For instance, the location may comprise a latitude and longitude of the base station. Optionally, the location may also include the altitude of the base station.

It may also be useful for the UE to have information about the number of sectors and/or the azimuth of the base station sectors. This information may be used to configure the shape and/or size of the directional antenna beam to allow the UE to communicate with the cellular network.

The information measured by and/or associated with the directional antenna may comprise one or more of the following: an angle of arrival of a signal received by the UE from the one or more base stations; an orientation and/or beamwidth configuration of the directional antenna; one or more capabilities of the directional antenna; a signal quality measurement; and a signal strength measurement. Other information elements currently incorporated in 3GPP standards may also be included, as well as future 3GPP information elements or any other suitable information elements.

The angle of arrival (AoA) may be a downlink (DL) AoA that is a measurement of the azimuth and zenith angles of arrival at the UE receiver for signals received from the network. The signal may comprise, for example, a channel state information reference signal (CSI-RS). The AoA can be used, optionally in conjunction with other information and/or data exchanged, to modify the configuration of the directive antenna.

The one or more capabilities of the directional antenna may comprise a gain, beamwidth, and/or a radiation pattern of the directional antenna. In some examples, the information may comprise a data reference (for example, a table reference) to provide basic capabilities or modified configurations at the UE.

The signal quality measurement may comprise a quality of service (QoS) parameter or key performance indicator (KPI). For instance, the signal quality measurement may be a reference signal received quality (RSRQ). The signal strength measurement may comprise, for example, a signal strength level per cell, a signal-to-noise ratio (SNR), a signal-to-interference-plus-noise ratio (SINR), received signal strength (for example, a received signal strength indicator (RSSI) or reference signal received power (RSRP)), and so on. Other signal quality and signal strength measurements currently incorporated in 3GPP standards or other information that may be useful for configuring the UE for communication with a base station (including, optionally, information useful for selecting the base station) may also or instead be used.

In step 202, the UE is configured for communication with a base station of the one or more base stations, based on the obtained information about the base station and the obtained information measured by or associated with the directional antenna. This may comprise changing a configuration of the directional antenna - for example, to direct the antenna towards the base station and/or away from other base stations. In other examples, the UE may move position to connect to the base station. This may be as well as or instead of changing the antenna configuration. Other methods of configuring the UE for communication with the base station may be implemented.

In some examples, prior to step 202, the method may further comprise selecting a base station from the one or more base stations based on the obtained information for the one or more base stations of the cellular network and the obtained information measured by or associated with the directional antenna. The base station that the UE is then configured for communication with at step 202 may then be the selected base station. Selecting the base station may comprise receiving a signal from at least some of the one or more base stations and selecting a base station for which a received signal strength at the UE is greater than a threshold amount. Other criteria may be used for selecting the base station as well as or instead of the received signal strength.

Following step 202, the method may further comprise, at step 203, communicating, between the UE and an entity in communication with the network, additional information associated with or measured by the UE. Additionally or alternatively, the method may further comprise, at step 203, communicating, between the UE and an entity in communication with the network, additional information associated with or determined by the one or more base stations. The entity may comprise, for example, the server that is in communication with the network (for instance, in the API approach), one or more base stations (for instance, in the 3GPP approach) or both. In other examples, other network entities may send or receive the additional information.

The additional information may be measured by or associated with the directional antenna. In further examples where the UE further comprises an omnidirectional antenna, the additional information may also or instead be measured by or associated with the omnidirectional antenna. In other words, the additional information elements discussed herein may be those measured by or associated with either or both of the directional antenna and the omnidirectional antenna.

The method may then proceed to steps 204a and/or 204b. Although these steps are illustrated in the flow chart of Figure 2 as separate steps following step 203, both steps may occur and one may occur before the other.

At step 204a, the UE may be further configured based on the additional information communicated between the UE and the network entity. The additional information may be information measured by or associated with the directional antenna. For example, the additional information may be updated information received from the base station or measured by the antenna after connecting to the base station. In other examples, the additional information may be additional information elements that were not obtained during step 201.

For example, the additional information may comprise a received signal strength that is higher at a base station further away than the base station the UE has already connected to. The UE may then be further configured to point the directional antenna more towards a closer base station.

The additional information may comprise an angle from a vertical axis of the directional antenna to the base station (in other words, a tilting of the antenna towards the base station). The method may then comprise determining another angle from the vertical axis to the base station (another tilting angle) that reduces, or is expected to reduce, interference to other base stations. In some examples, the method may comprise determining a tilting angle that increases, or is expected to increase, a signal to the base station. This may be the same angle that reduces an interference signal to other base stations. The method may thus comprise, at step 204a, adjusting an orientation of the directional antenna based on the another angle. This may allow network performance to be improved and/or reduce, limit or minimise network interference.

In another example, the UE may have connected to the initial base station according to a set of criteria, but once connected, a different set of criteria may be appropriate - for example, to enhance the connection between the UE and the network or to limit interference with other base stations of the network.

For instance, where there is a directional antenna only, the antenna may scan the different azimuths to find the best (for example, strongest or highest quality) signal level and the connection setup phase may be initiated based on that signal level. Where there is an omnidirectional antenna as well, the antenna may instead scan and connect to the best cell using the omnidirectional antenna according to 3GPP standards.

In either case, after connecting, the serving base station may determine the distance between the base stations in the surrounding area of the UE and the UE. If there is a base station closer than the serving base station, the base station may send a notification indicating this to the UE or a set of instructions to the UE that cause the UE to reconfigure itself to connect to the closer base station (that is, executing a handover to that base station). The UE may then accordingly redirect the antenna towards the closer base station. This may comprise adjusting the pointing angle of the directive antenna in the vertical plane towards the closer base station, as discussed above.

The different base station may be another base station of the one or more base stations about which information was obtained in step 201. Additional information for the different base station may also be obtained in step 203. In other examples, the different base station may be a base station about which information was first received in step 203.

It will be appreciated that another set of criteria may be used to determine the base station that the UE connects to in the connection setup phase and the different base station that the UE antenna is directed towards following the connection setup. For example, the initial base station may be the base station that is closest to the UE (or at least, in the vicinity of the UE) and the subsequent base station may be a base station providing a stronger or higher quality signal. Other criteria are possible. It will also be understood that references to a set of criteria herein includes the possibility that the set is a single criterion.

In further examples, the UE may connect to the base station initially according to parameters that are merely sufficient for connection and, after connection, the UE may be reconfigured based on another set of criteria. For example, the existing orientation and/or bandwidth of the directional antenna may allow for connection with the base station, so the UE may not change its antenna configuration when connecting to the base station. However, once connected, it may be determined that the connection can be improved by reconfiguring the antenna, or that interference with other base stations can be limited or reduced by reconfiguring the antenna.

For instance, the UE may measure or determine an angle of arrival of a signal from the base station. The AoA may not be the same as the angle between the UE and the base station, as the signal may not be received directly from the base station (for example, the received signal may be a reflected signal). This may especially be the case when the UE is comprised within an aircraft and in remote locations, where the signal may be reflected by landscape features - for example, the signal may be received via reflections in a valley. The AoA thus provides information about the direction that signals from the base station will be or are likely to be received and thus, the direction in which the directional antenna should be pointed. The UE directional antenna may have initially been configured based on a location of the base station, but this additional information allows the orientation and/or bandwidth of the antenna to be reconfigured to improve the connection.

In other examples, the additional information may be information measured by or associated with an omnidirectional antenna of the UE. Due to the differences in operation between an omnidirectional and directional antenna, the omnidirectional antenna may provide different information or more information than was obtained in step 201. This may be useful for refining the configuration of the various network elements.

For instance, after the UE has been configured for communication with the base station at step 202 based on the information obtained at step 201 by the UE (for example, by the directional antenna or that is stored by the UE), the omnidirectional antenna may identify additional base stations that were not identified by the UE. This may be because these additional base stations were outside the beamwidth range of the directional antenna, the information stored by the UE is out of date, and so on. However, since the omnidirectional antenna can scan in all directions, the additional can be picked up by the omnidirectional antenna. In other cases, the omnidirectional antenna may provide additional information about the one or more base stations. For instance, the UE may receive the information about the one or more base stations from a server and configure the directional antenna based on that information. However, if the server is missing information or the information is out of date, the omnidirectional antenna may be able to obtain more complete or up-to-date information. The UE (or another network entity) may then determine that communications with a different base station would be more appropriate - for example, the different base station is closer, has a higher signal strength or signal quality, and so on.

Thus, based on the additional information associated with or measured by the omnidirectional antenna, the method may further comprise ceasing communications between the UE and the base station and initiating communications between the UE and another base station. At step 204a, the UE may then be further configured by adjusting the orientation and/or bandwidth of the directional antenna to point towards the another base station.

In other examples, the omnidirectional antenna may identify additional base stations or obtain additional information about the one or more base stations that the UE should not, for one or more reasons, be configured to communicate with those base stations. This will be discussed in further detail with reference to step 204b.

At step 204b, the one or more base stations may be configured based on the additional information. This may comprise configuring the base station for which the UE was configured for communication with at step 202. For example, the UE may be ready to communicate with the base station, but further adjustments may be needed to allow the base station to communicate with the UE.

In other examples, step 204b may also or instead comprise adjusting configurations of other base stations of the one or more base stations. For example, as will be discussed in further detail with reference to Figure 3, the other base stations may change their configurations to prevent, limit or reduce communications to and/or received from the UE. This may, for example, include preventing or not accepting handover from the base station that the UE is configured to communicate with to another base station. In other examples, the other base stations may change their configurations to provide or increase communication to and/or received from the UE. This may include adjusting the configuration of the base station that the UE is configured to communicate to prevent, limit or reduce communications to and/or received from the UE.

For instance, the information and/or additional information associated with or measured by the omnidirectional antenna may comprise a signal strength measured by the directional antenna and received from the selected base station. The additional information may comprise a received signal strength measured by the omnidirectional antenna and received from another base station that is further away from the UE than the selected base station. In some cases, it may be advantageous to adjust the configuration of the other base station to prevent handover to the other base station. In other cases, it may be advantageous to cause handover to the other base station.

In some example, the handover may be prevented when the received signal strength from the selected base station is lower than the received signal strength from the another base station. This may be the case when the UE is aerial (for example, is comprised within or comprises an aircraft). As aircraft such as UAVs, for example, typically fly above environmental clutter, the aerial UE may register sufficient signal levels even from base stations that are several kilometres away, perhaps having even better signal levels than more local base stations. Thus, there may be interference from these base stations that are further away. This may be especially true in cases when the UE begins transmitting in uplink (which is a typical use case for UAVs providing video-streaming). The network could then block cells that are far away to prevent handover to those cells. This may be performed based on the additional information including a location of the UE.

In yet further examples, the additional information communicated at step 203 may indicate that another base station of the one or more base stations is more appropriate for communicating with the UE (for example, being closer and/or having a stronger signal). The another base station may therefore adjust its configuration to be able to communicate with the UE. Prior to or following this, the UE may then be further configured to communicate with the another base station (step 204a).

Figure 3 illustrates a flowchart of an exemplary method that may be implemented at steps 203 and 204a/204b of Figure 2.

After the connection between the UE and the base station has been established, a distance between the UE and the one or more base stations may be calculated (that is, one or more distances may be calculated) at step 301. The distance may be calculated only for base stations within a threshold distance of the UE. The distance may be calculated by the serving base station, an external server (for instance, an API server), the UE or another part of the network.

At step 302, based on the calculated distances, handover to another base station (that is, a base station other than the serving base station) is either caused or prevented.

For example, if it is determined that there is a base station closer than the serving base station, the serving base station or API server may send a command or directive to the UE to point the antenna towards the closer base station. This may execute a handover to the closer base station. The UE, serving base station or API server may determine a pointing angle of the directive antenna in the vertical plane (tilting of the antenna) towards the closer base station or other antenna orientation and/or bandwidth information to facilitate handover and/or limit interference to the serving base station. The antenna may be commanded to lower its beamwidth to reduce interference towards other base stations, for instance.

In some examples, signal level measurements by an omnidirectional antenna may be considered in the decision to handover or prevent handover. For example, if the serving station is already the closest base station to the UE but the calculated or measured signal is higher at another base station that is further away, the serving base station may forbid or otherwise prevent handover to that base station. This may limit interference received at the serving base station. Preventing handover may comprise determining a pointing angle of the directional antenna towards the serving base station or other antenna orientation and/or bandwidth information.

Similarly, in the API server approach, if the UE has an omnidirectional antenna, the API server may send a command to the UE to obtain signal level measurements, which may then be taken into consideration when executing orientation manoeuvres or other UE (re)configurations. As discussed above with relation to the serving base station, the API server can send commands and/or information to the UE to change the beamwidth and/or pointing direction of the antenna. The commands may be AT (attention) commands or another type of command.

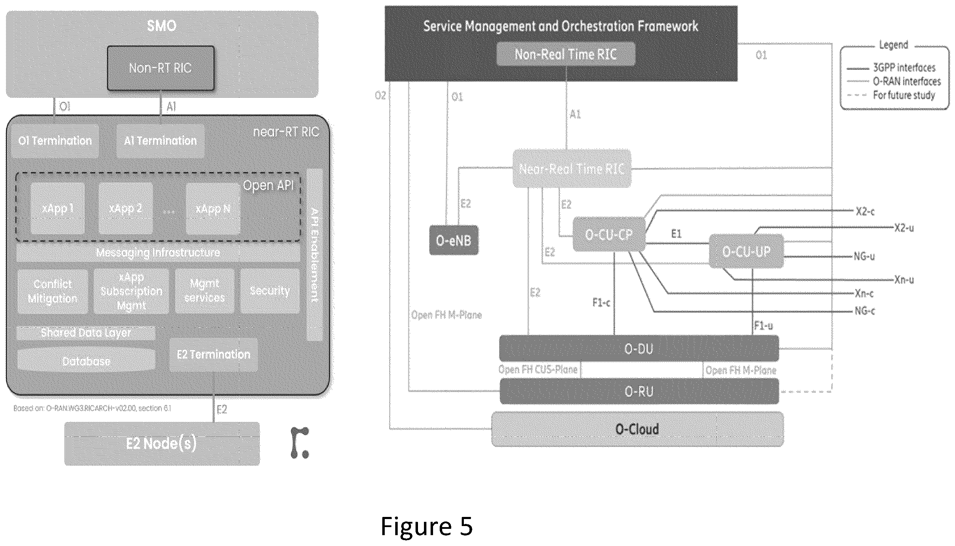

In the API server approach, the API server may optionally connect to network elements (for example, via a RIC system or OSS, as will be discussed with reference to Figures 4 and 5). The API server may then obtain the additional information from the network elements.

The additional information may include load information. The load of the one or more base stations can thus be taken into consideration when selecting a suitable or most suitable base station for the UE to connect to. Similarly, this may allow the decision not to connect to a base station that is experiencing relatively high load conditions.

Additionally or alternatively, the additional information may include interference information. The interference information may be extracted in near-real-time and may be exchanged with the UE in real-time (or near-real-time). This may allow the UE to determine actions to be taken and/or reconfigurations to be applied in order to limit, reduce or minimise interference from the UE. For example, the UE may reduce its altitude or redirect the directional antenna.

In examples where the UE is comprised within a UAV, the altitude of the UAV may be taken into account during steps 301 and/or 302. The base station and/or UE may only take certain actions when the altitude is beyond a threshold or outside of a range.

It will be appreciated that Figure 3 illustrates a flowchart of one exemplary method that may be implemented at steps 204a and/or 204b of Figure 2. In particular, other information may be used to cause or prevent handover to a base station. In other words, in general, the method may comprise comparing information relating to two or more base stations and, based on the comparison, causing or preventing handover to a base station of the one or more base stations. The information may comprise information associated with an antenna, measured by an antenna, information associated with at least one base station of the one or more base stations, information measured by at least one base station of the one or more base stations, or a combination of these.

Figure 4 illustrates exemplary schematic system architecture in which the methods discussed herein may be incorporated. The system 400 comprises a UE 410 that comprises a UAV control system 412 for a UAV 411. The UAV control system 412 may form part of a communication system of the UAV 411 (as well as the UE 410) or may be in communication with a separate communication system of the UAV 411.

The communication system includes a directional antenna that is configured for communication with a cellular network 416 via a node or base station 414. As discussed herein, typical UEs may comprise a generic omnidirectional antenna, but this is insufFicient for a UAV use case (due to the limited gain, for example). The base station 414 may be an eNB, gNB or another type of base station (for example, a base station configured for 6G operation). The eNB, gNB and other type of base station may be as defined in 3GPP standards.

A server 418 may also be in communication with the cellular network 416 and the UAV control system 412 to implement an API approach.

One approach using 3GPP standards will now be described in more detail with reference to Figure 4 (although it will be understood that this approach may be used in other telecommunications systems - for example, the UE need not be comprised within a UAV). In this approach, new information elements may be incorporated into 3GPP standards.

In current 3GPP standards, the information related to UAVs is described as follows in the Release 18 (Rel-18) report:
- Radio measurement framework to support height-dependent measurement report triggering (that is, events H1 and H2), specified in TS 38.331.
- To send measurement reports only if more than a configurable number of cells simultaneously meet reporting criteria (multi-cell report triggering).
- UAV UE to use height-specific configuration (for example, implementing a different set of parameters for the altitudes below and above the rooftops).
- UE may be asked by the network to provide its expected aerial route, comprising a set of geolocation points and associated timestamps.
- The role of RAN1 in Rel-18 investigated how to support Frequency Range 1 (FR1) beamforming for uplink (UL) UAV transmissions.
- Subscription-based UAV UE identification which shall ensure only drones with a proper 3GPP-compliant subscription will be served by 5G-Advanced networks.

Rel-18 also introduces a PCS-based functionality called BRID (Broadcasting UAV ID) so that the authorities or other users equipped with an appropriate receiver could be capable of detecting flying drones in the specific territory. A somewhat related mechanism is Detect and Avoid (DAA), which also relies on broadcasting via the PCS interface. The aim of DAA aim is to avoid and resolve potential collisions between two or more UAV UEs.

However, as discussed herein, none of the information in the Rel-18 report relates to directive antennas, because only UEs including omnidirectional antennas have been described.

In contrast, a 3GPP approach considered herein for communications between a directive antenna of a UE 410 and a telecommunications network 416 may include reporting or obtaining the following information elements:
- Location of the UE 410 may be sent to the network 416.
- Location of the network base stations 414 may be sent to the UE 410.
- Angle of Arrival of a signal received at the UE 410.
- Orientation and beamwidth used in real time by the antenna at the UE 410.
- New capabilities of the UE 410.
- Measurement reports according to each antenna type when two different antenna types are implemented in the UE 410.
- Other elements from 3GPP that may be useful for decisions by UE 410, UAV 411 or network 416. This may include, for example, a signal level per cell, SINR, packet drop rate, and so on.

These elements may be included in the radio resource control (RRC) protocol. This protocol allows the establishment, maintenance and release of radio resource connections and so on. This may include cell selection/reselection and handover procedures.

The UE location information may already be provided in some form according to existing 3GPP standards. For example, as discussed above, the expected route and altitude of a UAV may be transmitted according to Rel-18 - however, this is not described for a UAV having a directive antenna. The UE location information may be useful for the network to control the connection from the UE, guide the connection to an appropriate (for example, best) base station, limiting or reducing interference and/or distance to the base station. The appropriate base station may be determined based on a signal level or another criterion or criteria.

The base station location(s) may be provided to the UE 410. This information exchange can be used to configure the directive antenna towards a base station (or more than one base station). The UE 410 may then determine where the one or more base stations are in relation to its current position (or this may be provided as part of the base station location information). Providing the base station location(s) is not described in any 3GPP standard.

As discussed above, since UAVs typically fly above environmental clutter, aerial UEs may register sufficient or even good signal levels from base stations that are quite far away. This could result in high interference, as a UAV may typically point its antenna to a sufFiciently close or closest base station, which is not necessarily the base station it is connected to. In other examples, a UAV (or another UE) may direct its antenna based on a combination of distance and signal strength.

The base station location(s) may also be known to the network 416, The network 416 could block cells that are far away from the UE 410 to prevent handover to those cells (for example, once the location of the UE is known and shared).

The base station location information may include latitude and longitude of the base station 414, and may optionally including an altitude of the base station 414. Optionally, the location information can include a number of sectors of the base station 414 and an azimuth of one or more of those sectors.

Measurement data received from the UE 410 (for example, a DL AoA) can be used in conjunction with other known information and data exchanged to modify the configuration of the directive antenna. This may be used to improve or optimise the connection or limit or reduce interference.

Measurement information (for example, the orientation and/or beamwidth of the directional antenna) could be used by the network 416 to change and adapt the network base stations and/or avoid interference towards specific base stations. This action can be triggered by the network dynamically, at any time.

These information elements may be communicated from one or more base stations 414 of the cellular network 416 and/or from the UE 410, optionally between the one or more base stations 414 and the UE 410. When the information is obtained from the UE 410 and communicated to the cellular network 416, the information may be obtained from measurements made by the UE 410 and/or from information stored by the UE 410.

Another part of the new information elements that may be used relate to commands or directions - for example, from the network 416 or base station 414 to the UE 410 or UAV 411. Directions may be advisory notifications to the UE 410 that the UE 410 may or may not follow.

For example, the network 416 or base station 414 may instruct the UE 410 to change the configuration of the directive antenna. This may include, for instance, sending instructions to change a beamwidth of the antenna in its horizontal and/or vertical plane. In another example, this may include sending instructions to change a direction of a lobe of the antenna (for example, a main lobe). The change in direction may be in the horizontal and/or vertical plane.

In yet a further example, the network 416 or base station 414 may advise the UE 410 or UAV 411 to change location. This may include changing a latitude, longitude and/or altitude of the UE 410 or UAV 411). This advice may or may not be followed by the UE 410. In one example, the network 416 may send a direction to change an altitude of the UAV 411 by a certain amount and may provide a reason with the direction (for instance, to minimise interference). In another example, the network 416 may direct the UAV 411 to change its longitude and/or latitude. The reason given may be to enhance the connectivity conditions.

The UE 410 may include two different types of antenna: the directional antenna and a set of typical antennas that form a (quasi-)omnidirectional antenna. These two types of antennas may be included in any type of UE 410. These two types of antenna may allow new use cases for connection and connection configuration. For instance, during the connection setup phase, the typical omnidirectional antenna(s) may be employed to receive signals from any direction, and the UE 410 switches to using the directive antenna when a serving base station direction has been identified. In some examples, both antennas may be used. For instance, once the connection has been established, the omnidirectional antenna(s) may collect information of different signal levels of neighbouring cells with respect to the serving cell. This information may be used to cause or prevent handover, for example. In any case, where two different types of antenna are present, the new information elements may provide different reporting of signal measurements for each type of antenna.

Another option for exchanging information is using a server 418. In this case, an API can be used to exchange the information with the cellular network 416. One advantage of this approach is that it can allow information exchange with legacy UEs or other devices (for example, modems) that do not support sending and/or receiving the new information elements standardised in 3GPP standards (or to be standardised in 3GPP standards), but nevertheless have a directive antenna mounted to or included within them.

One possibility for implementing the API approach involves using a request-response model. The UE 410 or UAV 411 can call the API regularly or at predetermined times to exchange the information described above.

Another option is to implement a so-called pub/sub model (publish-subscribe pattern). In this case, multiple clients can connect to a broker server 418 and publish and/or subscribe to topics of interest. The API call may include an API token with an information access level or tier defining the level of information accessible by the client. The access level which may comprise access to only certain types of information, a subset of information or all information, depending on the access level. For example, a token may provide sufficient privilege to see drone telemetry only, or a token with a higher security level to see signal telemetry and a video-feed from the UE 410 or UAV 4111. The broker server 418 can make decisions based on the information in the API call, including the API token. Either or both of the UE 410 / UAV 411 and network 416 can publish information into the topics, and either or both can retrieve and act on information published by another entity. Security and privacy can be preserved since access to the information is subscription-based.

Referring still to Figure 4, the API option allows communication between the UAV control system 412 (or another control system - for example, when the UE 410 is not combined with a UAV) and the server 418, in order to receive information from the network 416 and use the information to modify one or more configurations of the antenna(s) and/or UAV movement. Communication between the UAV control system 412 or other control system and the server 418 may be via the normal user plane of the mobile connection.

The server 418 may be an API server in the network 416 where the API(s) can be exposed. Any additional functionality could be implemented in or by the server 418.

The UAV control system 412 or other control system may have access to information stored by or related to the UE 410. This information may include, for example, location information, antenna capabilities, antenna configuration, and, optionally, other 3GPP information (including signal level, for example). This may allow the information elements reporting new commands from the network 416 to be implemented in the API architecture option. The node 414 (for example, eNB or gNB) can continue to manage the mobile connection as usual, but the API server can send information to the UAV 411 to request a change of orientation and/or beamwidth of the antenna. It is through this procedure that the UAV can forcibly switch the serving cell through the eNB/gNB.

The API server could also retrieve information from the network 416. This may include load and interference data from the different cells, for example. Based on this information, actions may be suggested to the UAV 411 (including reconfiguration options). This information can be obtained by accessing the operations support systems (OSS) of the radio network or using (near-)real-time or non-real-time RAN Intelligent Controller (RIC) architecture used as part of the Open Radio Access Network (RAN) architecture. The API server can use an rAPP (real-time or near-real-time RIC application) and/or xAPP (non-real-time RIC application) to obtain more information from the network 416. This information can then be exposed as part of the API call. This procedure is illustrated in Figure 5.

Although Figure 4 has been described with reference to a UE 410 including a UAV control 412 for a UAV 411, it will be appreciated that other types of UE and/or control systems may be present in the system 400 instead of a UAV 411 and UAV control system 412 - for example, a robotics control system for a robot or autonomous device, or the UE may be a typical user communication device such as a mobile phone or tablet device, for example.

The methods described herein may be implemented with computer system configurations including hand-held devices, microprocessor systems, microprocessor- based or programmable consumer electronics, minicomputers, mainframe computers and the like. The embodiments can also be practiced in distributed computing environments, where tasks are performed by remote processing devices that are linked through a network.

Certain embodiments can also be embodied as computer-readable code on a non-transitory computer-readable medium. The computer readable medium is any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Although embodiments according to the disclosure have been described with reference to particular types of devices and applications (particularly mass spectrometers) and the embodiments have particular advantages in such case, as discussed herein, approaches according to the disclosure may be applied to other types of device and/or application. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

It will be appreciated that there is an implied "about" prior to values such as gains, temperatures, concentrations, times, pressures, flow rates, cross-sectional areas, voltages, currents, and so on discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %).

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a base station or UE) means "one or more" (for instance, one or more base stations or UEs).

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g. a first UE) may instead be termed a "second" element (e.g. a second UE) and an element termed a "second" element (e.g. a second UE) may instead be considered a "first" element (e.g. a first UE).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein.

All literature and similar materials cited in this application, including but not limited to patents, patent applications, articles, books, treaties and internet web pages are expressly incorporated by reference in their entirety for any purpose. Unless otherwise described, all technical and scientific terms used herein have a meaning as is commonly understood by one of ordinary skill in the art to which the various embodiments described herein belongs.

## Claims

1. A method for communicating with a UE comprising a directional antenna that is part of a communication system of the UE and that is configured for communication with a cellular network, the method comprising:
obtaining, at the cellular network and/or UE, information about one or more base stations of the cellular network and information measured by or associated with the directional antenna; and
configuring the UE for communication with a base station of the one or more base stations based on the obtained information about the base station and the obtained information measured by or associated with the directional antenna.

2. The method of claim 1, wherein obtaining the information comprises:
(a) obtaining the information from a server that is located outside the UE and is in communication with the cellular network, from the one or more base stations of the cellular network, from measurements made by the UE and/or from information stored by the UE; and/or
(b) configuring the directional antenna to operate using a wide beamwidth to identify the one or more base stations of the cellular network.

3. The method of claim 1 or claim 2, wherein
(i) the information about the one or more base stations comprises a location of the one or more base stations, a number of sectors of the one or more base stations and/or an azimuth angle of each sector of the one or more base stations; and/or
(ii) the information measured by or associated with the directional antenna comprises an angle of arrival of a signal received by the UE from the one or more base stations; an orientation and/or beamwidth configuration of the directional antenna; one or more capabilities of the directional antenna; a signal quality measurement; and a signal strength measurement.

4. The method of any previous claim, further comprising selecting a base station from the one or more base stations based on the obtained information for the one or more base stations of the cellular network and the obtained information measured by or associated with the directional antenna.

5. The method of claim 4, wherein selecting the base station from the one or more base stations based on the information comprises receiving a signal from at least some of the one or more base stations and selecting a base station for which a received signal strength at the UE is greater than a threshold amount.

6. The method of any previous claim, further comprising, after configuring the UE for communication with the base station:
communicating, between the UE and the server and/or between the UE and the one or more base stations, additional information associated with or measured by the UE; and/or
communicating, between the UE and the one or more base stations, additional information associated with or determined by the one or more base stations.

7. The method of claim 6, further comprising, after configuring the UE for communication with the base station based on the information, further configuring the UE based on the additional information and/or configuring the one or more stations based on the additional information.

8. The method of claim 7, wherein the additional information comprises an angle from a vertical axis of the directional antenna to the base station and the method further comprises determining another angle from the vertical axis of the directional antenna to the base station that reduces a signal to other base stations of the one or more base stations and/or increases a signal to the base station, wherein further configuring the UE comprises adjusting an orientation of the directional antenna based on the another angle.

9. The method of claim 7 or claim 8,
(i) wherein further configuring the UE comprises, when the distance between the UE and the base station is greater than the distance between the UE and a different base station, changing an orientation of the directional antenna to direct the directional antenna towards the different base station; and/or
(ii) further comprising determining an azimuth angle between the UE and the base station that is expected to increase a received signal strength at the UE and/or is expected to decrease a received signal strength from other base stations of the one or more base stations, wherein further configuring the UE comprises configuring the directional antenna based on the azimuth angle.

10. The method of any previous claim, wherein the UE further comprises an omnidirectional antenna.

11. The method of claim 10, wherein obtaining the information comprises controlling the omnidirectional antenna to identify the one or more base stations of the cellular network and wherein configuring the UE comprises adjusting the orientation and/or bandwidth of the directional antenna to point towards the base station.

12. The method of claim 10 or claim 11, wherein the additional information comprises information associated with or measured by the omnidirectional antenna, the method further comprising:
(a) based on the additional information, ceasing communications between the UE and the base station and initiating communications between the UE and another base station of the one or more base stations, wherein further configuring the UE comprises adjusting the orientation and/or bandwidth of the directional antenna to point towards the another base station; or
(b) based on the additional information, preventing handover from the base station to another base station of the one or more base stations.

13. The method of claim 12, wherein the additional information comprises a signal strength measured by the directional antenna and received from the base station and a signal strength measured by the omnidirectional antenna and received from the another base station, wherein the another base station is further away from the UE aircraft than the selected base station.

14. The method of any previous claim, wherein the UE is comprised within an aircraft.

15. A system for communicating with a UE comprising a directional antenna that is part of a communication system of the UE and that is configured for communication with a cellular network, the system being configured to perform the method of any one of the preceding claims.
